(19) Europäisches Patentamt
European Patent Office
Office européen des brevets

(11) **EP 1 777 703 A2**

(12) **EUROPEAN PATENT APPLICATION**

(43) Date of publication:
**25.04.2007 Bulletin 2007/17**

(51) Int Cl.:
***G11B 7/085*** (2006.01)     ***G11B 7/095*** (2006.01)

(21) Application number: **06122289.9**

(22) Date of filing: **13.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.10.2005 KR 20050097731**

(71) Applicant: **SAMSUNG ELECTRONICS CO., LTD.**
**Suwon-si,**
**Gyeonggi-do (KR)**

(72) Inventors:
• **Hong, Dong-ki**
  **Gyeonggi-do (KR)**
• **Kim, Sung-kyoo**
  **Suji-gu**
  **Yongin-si**
  **Gyeonggi-do (KR)**

(74) Representative: **Walaski, Jan Filip et al**
**Venner Shipley LLP**
**20 Little Britain**
**London EC1A 7DH (GB)**

(54) **Focus control device and method**

(57) A focus pull-in control device for focusing a light beam on an information recording surface of an information recording medium includes an optical pickup and a control unit. The optical pickup has a light source to emit a light beam, an objective lens to focus the light beam along an optical axis direction on the information recording surface, a focus actuator to move the objective lens in the optical axis direction, and a photodetector to detect the light beam reflected by the information recording medium and to convert the detected light beam into an electric signal. The control unit controls an access speed of the objective lens by driving the focus actuator with reference to a surface vibration data comprising a previously obtained surface vibration amount of the information recording medium to perform a focus search while moving the light beam across the information recording medium and while moving the objective lens.

## FIG. 6

EP 1 777 703 A2

## Description

Aspects of the present invention relate to a device for focus control, particularly but not exclusively to controlling focus pull-in in a recording and/or reproducing device, and a method thereof.

Optical recording and/or reproducing apparatuses record data or reproduce the recorded data with respect to an optical disk using an optical pickup. The optical pickup records data by emitting a laser beam onto a surface of the optical disk or reads out the recorded data by receiving the laser beam reflected by the surface of the optical disk. For this purpose, the optical pickup must be accurately focused on a data recording layer of the optical disk, for instance using a focus servo.

The optical pickup focuses the laser beam on the data recording layer of the optical disk taking account of surface vibrations of the optical disk. Surface vibrations are up and down movements of the optical disk occurring during the rotation of the optical disk. The vibrations are mainly caused by optical disks having a slightly warped shape. The optical pickup takes account of the surface vibrations of the optical disk, determines a right time to begin a focus pull-in while moving an objective lens up and down, and pulls in the laser beam on the data recording surface of the optical disk when the optical pickup determines the appropriate point to begin the pull-in.

However, when the speed of surface vibrations of the optical disk is the same as or greater than the speed of the up/down movements of the objective lens, the focus pull-in of the laser beam fails. In this case, a conventional optical recording/reproducing apparatus decelerates the speed of a spindle motor that rotates the optical disk to lower the speed of the surface vibrations of the optical disk. That is, the speed of rotation of the optical disk is reduced. The focus pull-in of the laser beam is then reattempted with respect to the optical disk whose rotational speed is reduced.

When the focus pull-in is successful, the optical recording/reproducing apparatus accelerates the speed of the spindle motor and then performs data recording or reproduction operations with respect to the optical disk. However, when the reattempt of the focus pull-in fails, the conventional optical recording and reproducing apparatus repeatedly reattempts the above-described operations to perform the focus pull-in.

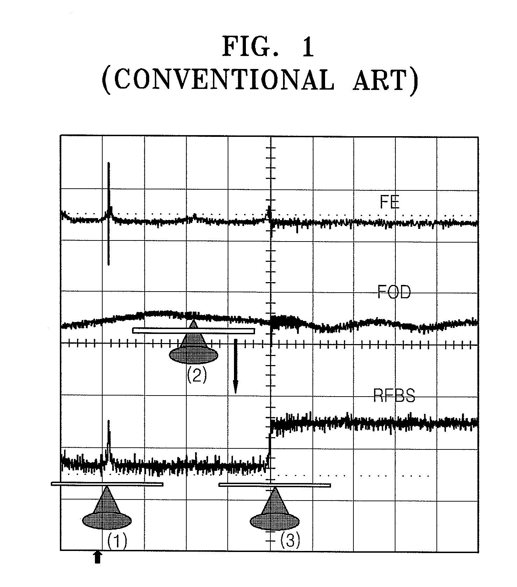

Figure 1 is a waveform diagram illustrating the major signals involved in a focus pull-in process of an optical disk drive. In general, in its initial stages, the optical disk drive sequentially performs the processes of (1) determining the type of a loaded disk, (2) preparing for the focus pull-in, and (3) turning on a focus servo. FE denotes a focus error signal, FOD denotes a focus actuator drive signal, and an RFBS denotes an RF SUM signal.

In Figure 1, the processes of preparing for the focus pull-in and turning on the focus servo include the steps of (1) raising a lens of the pickup to the uppermost position allowed by design, (2) lowering the lens, and (3) turning on the focus servo when the lens reaches a position where the focus error signal FE is 0.

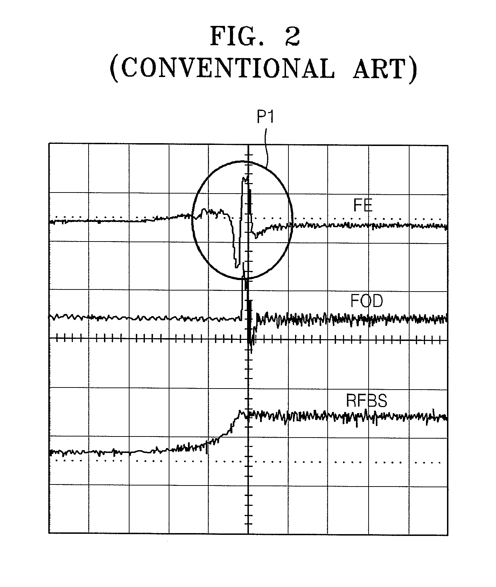

Figure 2 is a magnified waveform diagram of the focus error signal FE at a point focus pull-in begins when the focus servo is turned on. In a normal disk, the S curve of the focus error signal FE is generated once during the process of raising the lens of the pickup and once again during the process of lowering the lens. The focus servo is turned on when the focus error signal FE is converged to a predetermined value.

According to the conventional optical recording/ reproducing apparatus, the attempt to perform the focus pull-in is repeated several times while a spindle speed is decreased until the focus pull-in succeeds. Therefore, the time needed to begin performing the focus pull-in is gradually increased. Thus, a lot of time is wasted prior to performing a data recording or reproducing due to the failure to perform the focus pull-in.

To address the above and/or other problems, aspects of the present invention provide a device for controlling focus pull-in which can effectively perform the focus pull-in with respect to a disk having a large surface vibration, and a method thereof.

According to an aspect of the present invention, a focus pull-in control device for focusing a light beam on an information recording surface of an information recording medium includes an optical pickup including a light source to emit a light beam, an objective lens to focus the light beam along an optical axis direction on the information recording surface, a focus actuator to move the objective lens in the optical axis direction, and a photodetector to detect the light beam reflected by the information recording medium and to convert the detected light beam into an electric signal, and a control unit to control an access speed of the objective lens by driving the focus actuator with reference to surface vibration data comprising a previously obtained surface vibration amount of the information recording medium to perform focus search by moving the objective lens while moving the light beam across the information recording medium.

According to aspects of the present invention, the control unit obtains the surface vibration data from a predetermined position of the information recording medium using focus actuator drive signals of each area disk position corresponding to a sector of the disk by dividing one turn of a spindle by a number N and storing the focus actuator drive signals.

According to aspects of the present invention, the predetermined position is an outer circumferential portion of the information recording medium.

According to aspects of the present invention, the control unit evaluates the surface vibration data at a spindle speed slower than a highest one of the multiple speeds of the information recording medium.

According to aspects of the present invention, the control unit generates a signal to drive the focus actuator by adding the surface vibration data to a signal to drive the focus actuator.

According to aspects of the present invention, the control unit generates a signal to drive the focus actuator by multiplying a factor by an obtained surface vibration taking account of the position of the optical pickup during the focus pull-in, when the signal to drive the focus actuator is generated.

According to another aspect of the present invention, a method for controlling focus pull-in to focus a light beam on an information recording surface of an information recording medium includes detecting a surface vibration amount of the information recording medium to obtain surface vibration data, and while moving the light beam across the information recording medium and while moving the objective lens, performing a focus search by controlling an access speed of an objective lens by driving a focus actuator with reference to the obtained surface vibration data.

According to aspects of the present invention, the obtaining of a surface vibration amount of the information recording medium comprises obtaining the surface vibration data from a predetermined position of the information recording medium by using focus actuator drive signals of each disk position corresponding to a sector of a disk obtained by dividing one turn of a spindle by a number N and storing the divided focus actuator drive signals.

According to aspects of the present invention, the predetermined position is an outer circumferential portion of the information recording medium.

According to aspects of the present invention, the obtaining of a surface vibration amount of the information recording medium comprises obtaining the surface vibration amount at a spindle speed slower than a highest one of the multiple speeds of the information recording medium.

According to aspects of the present invention, the controlling of an access speed of an objective lens comprises generating a signal to drive the focus actuator by adding the surface vibration data to the signal to drive the focus actuator.

According to aspects of the present invention, in the generating of the focus actuator drive signal, a factor is multiplied to the surface vibration data taking account of the position of the optical pickup during the focus pull-in.

According to aspects of the present invention, a focus control device of a recording and/or reproducing apparatus, the device including an objective lens to focus a light on the disc, a focus actuator to control a focus of the objective lens, and a control unit to control the focus to match the surface vibration of the disc using a focus actuator drive signal that includes a stored surface vibration information.

According to aspects of the present invention, a method of controlling a focus of an objective lens of a recording and/or reproducing apparatus, includes obtaining a surface vibration information of the disc, generating a first focus actuator drive signal, generating a second focus actuator drive signal by adding the obtained surface vibration information to the first focus actuator drive signal, and controlling the focus of the objective lens using the second focus actuator drive signal to match the surface vibration of the disc.

Additional aspects and/or advantages of the invention will be set forth in part in the description which follows and, in part, will be obvious from the description, or may be learned by practice of the invention.

Embodiments of the invention will now be described, by way of example, with reference to the accompanying drawings, in which:

Figure 1 is a waveform diagram illustrating the major signals involved in a focus pull-in process of an optical disk drive;

Figure 2 illustrates a magnified portion of the waveform diagram of Figure 1, showing the focus error signal FE of the at a point focus pull-in begins when the focus servo is turned on;

Figure 3 is a block diagram of a focus pull-in control device according to an aspect of the present invention;

Figure 4 is a graph showing surface vibration data used for the focus pull-in operation according to the present invention;

Figure 5 is a graph showing the result of comparison between a focus actuator drive signal (an FOD signal) according to the conventional method and a focus actuator drive signal (an FOD signal) according to an aspect of the present invention; and

Figure 6 is a flow chart for explaining the focus pull-in operation according to an aspect of the present invention.

Aspects of the present invention evaluate surface vibrations of a disk relative to rotation of a spindle motor and increase the success rate of a focus pull-in with respect to disks having large surface vibration using surface vibration information in a focus pull-in operation. In various aspects of the present invention, the focus pull-in is controlled by an objective lens to match an up and down movement of an optical disc so that a laser beam is focused on a vibrating surface of the optical disc. To have matching movement, the time at which the focus pull-in is to begin should be determined as accurately as possible.

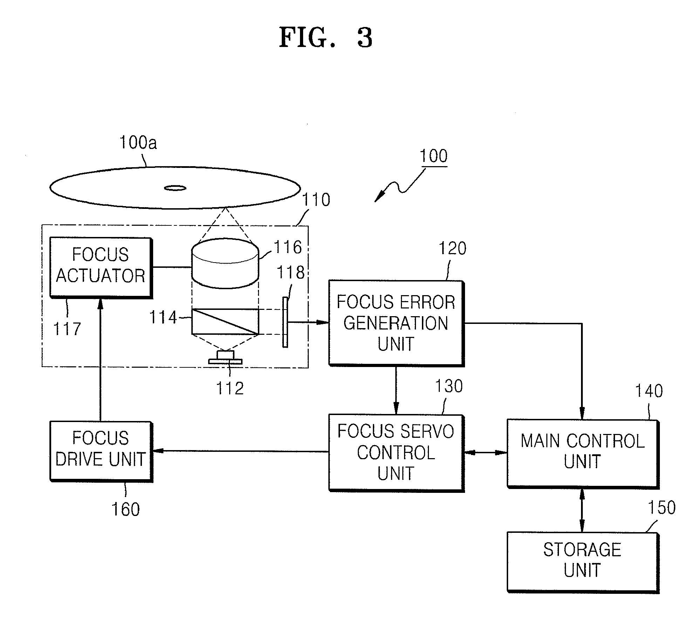

Figure 3 is a block diagram of a focus pull-in control device according to an aspect of the present invention. Referring to Figure 3, a focus pull-in control device 100 includes an optical pickup 110, a focus error generation unit 120, a focus servo control unit 130, a main control unit 140, a storage portion 150, and/or a focus drive unit 160. It is understood that the focus pull-in control device 100 may include other components, and may also have some of the components combined. According to an aspect of the present invention, focus pull-in control device 100 accurately pulls in a laser beam on a surface of an optical disk 100a in an optical recording/ reproducing (i.e., an optical recording and/or reproducing) apparatus.

The optical recording/reproducing apparatus (for example, a DVDR or PC) records data on an optical disk or reproduces the recorded data. The optical disk includes, by way of example, a variety of disks such as a CD (compact disc), a DVD (digital versatile disk), or the like. It is understood that non-limiting examples of the optical recording/reproducing apparatus include any device that can record to or reproduce data from any type of optical disks. Such devices further include a compact disc player as well. It is also understood that any type of optical disk may be used. Such examples of optical disks include HD-DVD and Blu-ray disks. The optical disks may be read-only and/or rewriteable.

The optical pickup 110 reads out the data recorded on a recording surface of the optical disk 100a and converts the read data into an electric signal. For this purpose, the optical pickup 110 includes a light source 112, a beam splitter 114, an objective lens 116, a focus actuator 117, and a photodetector 118. It is understood that the optical pickup 110 may include other elements that are usable with the optical pickup, such as an aperture controller, or the like, and can have other configurations.

The light source 112 outputs a laser beam. In various aspects of the present invention, the light source 112 outputs a laser beam having a different wavelength according to the type of the optical disk 100a. For example, when a DVD is loaded as the optical disk 100a, the light source 112 emits a laser beam having a wavelength of about 650 nm.

The beam splitter 114 reflects or transmits the laser beam emitted by the light source 112 at a predetermined ratio. The objective lens 116 focuses the laser beam output from the beam splitter 114 on the recording surface of the optical disk 100a. The focus actuator 117 actuates the objective lens 116 up and down (i.e., towards or away from the optical disc 100a) so that the laser beam incident on the optical disk 100a can be accurately focused on the recording surface of the optical disk 100a. That is, the focus actuator 117 actuates the objective lens 116 up and down to turn on a focus servo (not shown) so that the distance between the optical disk 100a and the objective lens 116 is adjusted. Turning on the focus servo signifies that the focus of the optical pickup 110 is pulled in. The focus servo is generally used to accurately focus the laser beam on the recording surface of the optical disk 100a to record and/or reproduce data with respect to the optical disk 100a.

The photodetector 118 detects the laser beam reflected by the recording surface of the optical disk 100a and converts the detected laser beam into an electric signal. A photodiode integrated circuit (IC) is typically used as the photodetector 118. However, it is understood that any device that converts light into an electric signal may be used.

The focus error generation unit 120 generates a focus error signal (FE signal) for the focus servo (i.e., the focus pull-in) using the electric signal output from the photodetector 118. The generated focus error signal is provided to the focus servo control unit 130.

The focus servo control unit 130 performs signal processing, such as digital conversion, by receiving the focus error signal from the focus error generation unit 120. The focus servo control unit 130 outputs a drive control signal to drive the focus actuator 117 based on the focus error signal that is signal processed. That is, the focus servo control unit 130 outputs the drive control signal to the focus drive unit 160 to drive the focus actuator 117 to move the objective lens 116 up or down so that the focus of the optical pickup 110 is pulled in. In particular, a drive control signal (an FOD signal), which is also referred to as a focus actuator drive signal, is transmitted to the main control unit 140 to generate surface vibration information (and/or data) about the surface vibration of the disk according to an aspect of the present invention. When the focus pull-in is reattempted, the surface vibration information about the surface vibration of the disk 100a is received from the main control unit 140, added to the drive control signal for the present focus pull-in attempt, and provided to the focus actuator 117.

The focus drive unit 160 supplies a current corresponding to the drive control signal output from the focus servo control unit 130 to the focus actuator 117. Thus, the focus actuator 117 moves the objective lens 116 up or down in proportion to the current supplied by the focus drive unit 160 so that the focus pull-in of the optical pickup 110 is performed. In the aspect of the present invention, when a drive deceleration control signal is received from the focus servo control unit 130, the focus drive unit 160 drives the focus actuator 117 for a predetermined time at a reduced drive speed corresponding to a drive speed reduction control signal.

The main control unit 140 controls the overall operation of the focus pull-in control device 100 using various control programs stored in the storage portion 150. When the focus pull-in control device 100 according to aspects of the present invention is included in the optical recording/reproducing apparatus, the main control unit 140 can control the overall operation of the optical recording/reproducing apparatus.

In particular, the main control unit 140 according to an aspect of the present invention stores the surface vibration information obtained from the previous evaluation of the surface vibration with respect to the disk 100a in the storage portion 150. The main control unit 140 controls the focus servo control unit 130 to perform the focus pull-in operation using the surface vibration information that is stored in the storage portion 150 when the next focus is pulled in. The focus servo control unit 130 transmits the focus actuator drive signal (FOD) from an initial or a previous disk loading to the main control unit 140.

The main control unit 140 stores such initial or previous focus actuator drive signal, which may be the surface vibration information in the storage portion 150, and provides the surface vibration information stored in the storage portion 150 to the focus servo control unit 130 when the next focus is pulled in. Then, the focus servo control unit 130 adds the surface vibration information to the current focus actuator drive signal to generate the focus actuator drive signal. The generated focus actuator drive signal is provided to the focus actuator 117 to perform the focus pull-in. In various aspects of the present invention, the drive control signal, the focus actuator drive signal, or the like may be of the previous disk rotation or of any time during a recording and/or reproducing process.

The operation of the focus pull-in control device 100 that performs the focus pull-in by evaluating the surface vibration and using the surface vibration information is described below.

When the disk 100a is first loaded, various automatic adjustments are generally performed. At this time, the focus pull-in control device 100 performs the disk surface vibration evaluation using the outermost circumference of the disk 100a. In many cases, since the optical pickup 110 is moved to the outer circumference due to tilt correction during the automatic adjustment operation, the evaluation can be performed at this time. If the optical pickup 110 is not usually moved to the outer circumference during automatic adjustments, an operation moving the optical pickup 110 to the outer circumference can be added to perform the evaluation. However, the above description merely shows that it is preferable, but not required, to perform the surface vibration evaluation at the outer circumference of a disk having a relatively large surface vibration, and that it is preferable, but not required, to perform the surface vibration evaluation during performance of the automatic adjustments.

The place of the surface vibration evaluation according to aspects of the present invention is not limited to the outer circumference and the evaluation can be performed at any position on the disk. Additionally, the timing of the surface vibration evaluation according to aspects of the present invention is no limited to when a disk is first loaded and it can be performed any time during disk recording and/or reproduction. Also, for a high multiple speed disk system that has a change of speed from a low multiple speed during an initial stage to a high multiple speed during a later stage, the surface vibration evaluation is preferably performed in the initial low multiple speed stage. These multiples are indicated, for example, as 2X, 4X, and so on of a base speed. However, such is not required and the evaluation may be performed at any speed.

In a non-limiting example, the surface vibration data (or information) is obtained from the outer circumference of the disk 100a using focus actuator drive signals of each disk position corresponding to a sector of the disk 100a obtained by dividing one turn of the spindle by N. N may be a number such as a whole number. The obtained focus actuator drive signals are then appropriately filtered using a low pass filter. The surface vibration data is then stored in the storage portion 150. In a non-limiting aspect of the present invention, the focus actuator drive signals may be stored in synchronization with the output from a frequency generator (FG) sensor of the spindle motor, as will be discussed below.

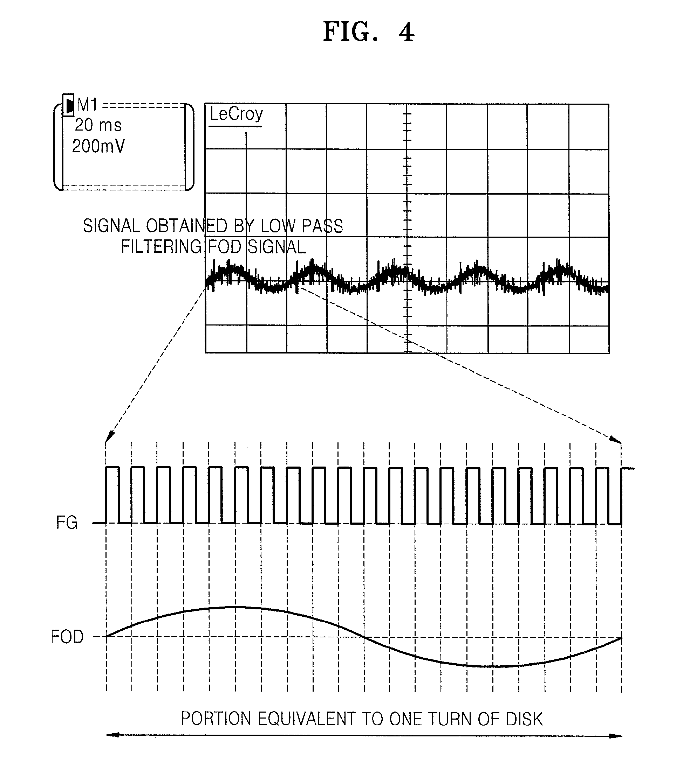

Figure 4 shows an example of the surface vibration data stored in the storage portion 150. Referring to Figure 4, the focus actuator drive (FOD) signal equivalent to one turn of a disk is stored in synchronization with the FG signal. A sine wave signal that corresponds to the focus actuator drive signal (FOD signal) is subsequently added to the focus actuator drive signal (FOD signal) when the focus pull-in is reattempted.

When the focus is later off during the disk recording/reproducing operation and the pull-in operation is reattempted, the focus pull-in control device 100 searches for the right time to begin focus pull-in using the surface vibration data stored in the storage portion 150. That is, when the focus actuator 117 moves the objective lens 116 up and down at a particular speed, the main control unit 140 controls the focus servo control unit 130 so that the surface vibration data stored in the storage portion 150 that corresponds to the present spindle position is added to the current actuator drive signal. Then, the focus servo control unit 130 controls the focus drive unit 160 to output the combined actuator drive signal after adding in the surface vibration data to the current actuator drive signal.

Since the amount of surface vibration differs depending on where the optical pickup 110 is located, a factor K may be multiplied to the surface vibration data value that is to be added to the actuator drive command signal depending on a position of the optical pickup 110 relative to the disk 100a. In various aspects, the locations or the position of the optical pickup 110 may be at or near the inner and/or outer circumferences of the disk 100a, or at or near any position in between. Although there will be many ways to define the factor, the following equation can be used:

$$K = a/b$$

In the equation, "a" is the radial position (radius) of the optical pickup when focus is pulled in and "b" is the position (radius) of the optical pickup during the surface vibration evaluation.

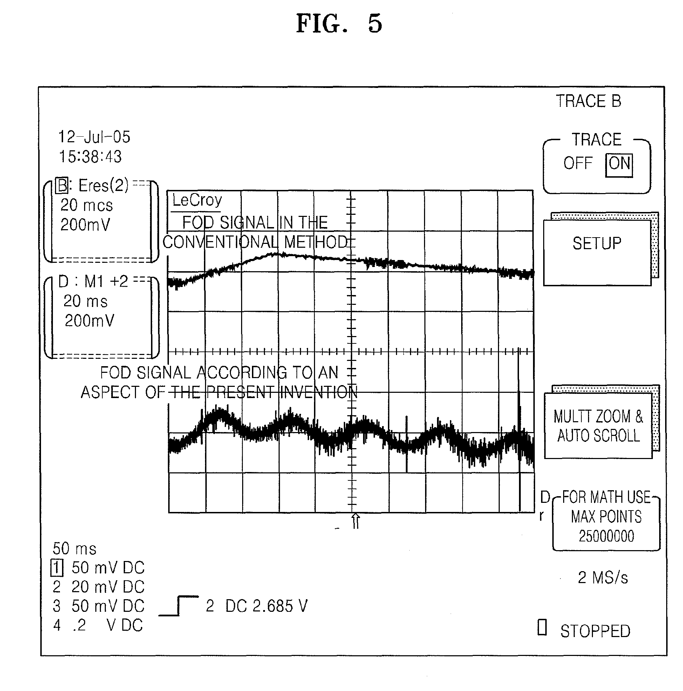

Figure 5 is a graph showing a comparison between an FOD signal according to a conventional method and an FOD signal according to an aspect of the present invention. Referring to Figure 5, the focus actuator drive signal according to the conventional method has a triangular waveform due to the up or down movement of the focus actuator 117 occurring at a particular speed. In contrast, the FOD signal according to an aspect of the present invention is output by adding the surface vibration data FOD of the sine wave shown in Figure 4 to a focus actuator drive signal having a triangular waveform. Thus, the FOD signal according to an aspect of the present invention has a sine waveform having added surface vibration information as shown in the lower portion of Figure 5.

When the focus pull-in is reattempted, since the focus actuator 117 is controlled using the previously evaluated surface vibration information instead of simply moving the focus actuator up and down at a particular speed, the focus actuator 117 can be driven taking account of the surface vibration of the disk so that failure of the focus pull-in can be reduced.

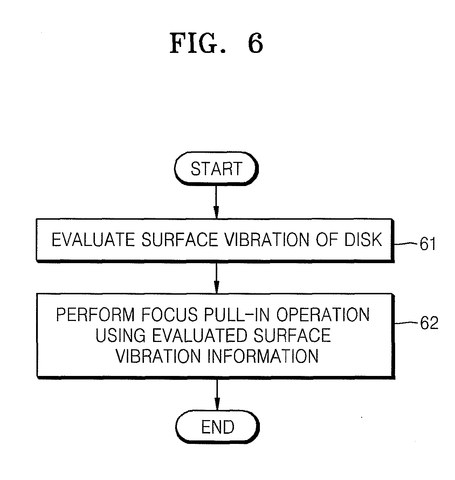

Figure 6 is a flow chart for explaining the focus pull-in operation according to an aspect of the present invention. Referring to Figure 6, the focus pull-in control device 100 evaluates the surface vibration of the disk (61). The obtained surface vibration information is stored in the storage portion 150 to be used for the next focus pull-in. Next, when the focus pull-in is reattempted, the focus pull-in control device 100 performs the focus pull-in operation again using the stored surface vibration information (62). While not required in all aspects of the present invention, it is understood that elements of the method can be implemented as software readable by a computer or a processor. While described as being obtained through testing, it is understood that the surface vibration information may be prestored, uploaded, hardwired, or the like.

As described above, according to various aspects of the present invention, since the previously obtained disk surface vibration information is used when the focus pull-in is reattempted, the focus pull-in can be effectively performed while reducing the failure of the focus pull-in with respect to a disk having a large surface vibration amount.

Although a few embodiments of the present invention have been shown and described, it would be appreciated by those skilled in the art that changes may be made in this embodiment without departing from the principles of the invention, the scope of which is defined by the appended claims.

## Claims

1. A focus control device for a recording and/or reproducing apparatus, the device comprising:

    a focus actuator to control focusing of light onto an optical recording medium; and
    a control unit for providing a focus actuator drive signal to the focus actuator such that focusing of the light is controlled in dependence on stored surface vibration data corresponding to the optical recording medium.

2. A focus control device according to claim 1, further comprising a lens to focus the light onto the optical recording medium.

3. A focus control device according to claim 2, wherein the optical recording medium comprises an optical disc and wherein the lens comprises an objective lens.

4. A focus control device according to claim 1, 2 or 3, wherein the surface vibration data comprises a previous focus actuator drive signal generated prior to the focus actuator drive signal provided by the control unit.

5. A focus control device according to any preceding claim, wherein the control unit uses the focus actuator drive signal during performance of a focus search.

6. A focus control device according to any preceding claim, comprising means operable to obtain the surface vibration data when the recording and/or reproducing apparatus is operating at a low speed and wherein the control unit is arranged to use the focus actuator drive signal comprising the surface vibration data when the recording and/or reproducing apparatus is operating at a high speed.

7. A focus control device according to claim 1, further comprising:

    an optical pickup including a light source to emit the light in the form of a light beam;
    a photodetector to detect light reflected by the optical recording medium and to convert the detected light into an electric signal; and
    a lens arranged to focus the light beam along an optical axis onto an information recording surface of the optical recording medium; wherein the focus actuator is arranged to move the lens in the optical axis direction; and
    the control unit is arranged to control an access speed of the lens by driving the focus actuator with reference to the surface vibration data comprising a previously obtained surface vibration amount of the information recording medium to perform focus search by moving the objective lens while moving the light beam across the information recording medium.

8. A focus control device according to any preceding claim, wherein the control unit obtains the surface vibration data from a predetermined position on the optical recording medium.

9. A focus control device according to claim 8, wherein the control unit obtains the surface vibration data using focus actuator drive signals for each disc position corresponding to a sector of the optical recording medium obtained by dividing one turn of a spindle by a number N and storing the focus actuator drive signals.

10. A focus control device according to claim 8 or 9, wherein the predetermined position is an outer circumferential portion of the optical recording medium.

11. A focus control device according to any preceding claim, wherein the optical recording medium is recordable and/or readable at multiple speeds, and the control unit evaluates the surface vibration data at a speed slower than a highest one of the multiple speeds of the optical recording medium.

12. A focus control device according to any preceding claim, wherein the control unit generates a signal to drive the focus actuator by adding the surface vibration data to a focus actuator driving signal.

13. A focus control device according to claim 7, wherein the control unit generates the signal to drive the focus actuator by multiplying an obtained surface vibration amount by a factor dependent on the position of the optical pickup.

14. A focus control device according to any preceding claim, wherein the control unit obtains the surface vibration data when the optical recording medium is initially loaded, and prior to performing a focus search.

15. A focus control device according to any preceding claim, further comprising a memory, wherein the control unit obtains the surface vibration data from the memory.

16. A focus control device according to claim 13, wherein the factor is defined as K=a/b, wherein "a" is a radial position (radius) of the optical pickup when focus is pulled in and "b" is a position (radius) of the optical pickup during the surface vibration evaluation.

17. A method of controlling the focusing of light onto an optical recording medium, the method comprising:

   controlling the focusing of the light onto the optical recording medium in dependence on stored surface vibration data corresponding to the optical recording medium.

18. A method according to claims 17, further comprising detecting surface vibrations of the optical recording medium to obtain the surface vibration data.

19. A method according to claim 18, further comprising performing a focus search by controlling an access speed of an objective lens by driving a focus actuator with reference to the obtained surface vibration data.

20. A method according to claim 19, wherein detecting the surface vibrations is performed at a predetermined position on the optical recording medium.

21. A method according to claim 19, wherein detecting surface vibrations of the optical recording medium comprises obtaining the surface vibration data from a predetermined position of the optical recording medium by using focus actuator drive signals of each disk position corresponding to a sector of a disk obtained by dividing one turn of a spindle by a number N and storing the focus actuator drive signals.

22. A method according to claim 20 or 21, wherein the predetermined position is an outer circumferential portion of the optical recording medium.

23. A method according to any one of claims 19 to 22, wherein detecting the surface vibrations of the optical recording medium comprises detecting surface vibrations at a speed slower than a highest one of the multiple speeds at which the optical recording medium can be read/written to.

24. A method according to claim 19, wherein the controlling of an access speed of an objective lens comprises generating a signal to drive the focus actuator by adding the surface vibration data to the signal to drive the focus actuator.

25. A method according to claim 24, wherein, in the generating of the focus actuator drive signal, the surface vibration data is multiplied by a factor dependent on the position of an optical pickup during focus pull-in.

26. A method according to any one of claims 19 to 25, wherein detecting the surface vibrations of the optical recording medium occurs when the optical recording medium is initially loaded, and prior to performing the focus search.

27. A method according to any one of claims 19 to 26, wherein the surface vibration data is obtained from a memory.

28. A method according to claim 25, wherein the factor is defined as, K=a/b, wherein "a" is a radial position (radius) of the optical pickup when focus is pulled in and "b" is a position (radius) of the optical pickup during the surface vibration detection.

29. A method according to any one of claims 19 to 28, further comprising:

generating a first focus actuator drive signal;
generating a second focus actuator drive signal by adding the stored surface vibration data to the first focus actuator drive signal; and controlling the focus of the objective lens using the second focus actuator drive signal.

**30.** A method according to claim 29, wherein the surface vibration data comprises a focus actuator drive signal generated prior to the first focus actuator drive signal.

**31.** A method according to claim 29 or 30, wherein controlling the focus of the objective lens includes controlling the focus of the objective lens using the second focus actuator drive signal when focus search is performed.

# FIG. 1
# (CONVENTIONAL ART)

# FIG. 2
# (CONVENTIONAL ART)

P1

FE

FOD

RFBS

# FIG. 3

# FIG. 4

M1
20 ms
200mV

LeCroy

SIGNAL OBTAINED BY LOW PASS
FILTERING FOD SIGNAL

FG

FOD

PORTION EQUIVALENT TO ONE TURN OF DISK

# FIG. 5

# FIG. 6

```
        ( START )
            │
            ▼
┌─────────────────────────────────┐
│ EVALUATE SURFACE VIBRATION OF DISK │──61
└─────────────────────────────────┘
            │
            ▼
┌─────────────────────────────────┐
│   PERFORM FOCUS PULL-IN OPERATION  │──62
│      USING EVALUATED SURFACE       │
│       VIBRATION INFORMATION        │
└─────────────────────────────────┘
            │
            ▼
         ( END )
```